# EUROPÄISCHE PATENTANMELDUNG

(11) **EP 0 970 858 A2**
(43) Veröffentlichungstag der Anmeldung: **12.01.2000**
(21) Anmeldenummer: 99112250.8
(22) Anmeldetag: 25.06.1999
(51) Int. Cl.: B60R 22/46

(54) **Gurtstraffer**

(30) Priorität: 29.06.1998 DE 29811538 U
(71) Anmelder: Dittrich, Klaus-Jürgen, 28832 Achim (DE)
(72) Erfinder: Dittrich, Klaus-Jürgen, 28832 Achim (DE)
(74) Vertreter: Eisenführ, Speiser & Partner

(57) **Zusammenfassung**

Es wird ein Gurtstraffer für ein Fahrzeuginsassen-Rückhaltesystem angegeben, mit einem Zylinder (10), einem in dem Zylinder verschiebbaren Kolben (1), mindestens einem Zugseil (6), welches von dem Kolben mit geringem Spiel durch eine vordere Zylinderstirnwand (14) zu einem Gurtanlenkglied verläuft, einem Gasgenerator, bei dessen Zündung ein Treibmittel in einen Druckraum (26) zwischen dem Kolben (1) und der vorderen Zylinderstirnwand (14) einströmt und den Kolben von einer vorderen Normalposition in eine hintere Straffhalteposition verschiebt, und einer Rücklaufsperre (30,34), welche den Kolben in der Straffhalteposition hält. Der Gurtstraffer ist dadurch gekennzeichnet, daß die Rücklaufsperre einen Konusabschnitt (30) mit zum hinteren Ende des Zylinders zunehmendem Durchmesser und auf dem Konusabschnitt einen in Zylinderrichtung verschiebbaren Sperrkörper (34) enthält.

## Beschreibung

Die Erfindung betrifft einen Gurtstraffer für ein Fahrzeuginsassen-Rückhaltesystem mit einem Zylinder, einem in dem Zylinder verschiebbaren Kolben, mindestens einem Zugseil, welches von dem Kolben mit geringem Spiel durch eine vordere Zylinderstirnwand zu einem Gurtanlenkglied verläuft, einem Gasgenerator, bei dessen Zündung ein Treibmittel in einen Druckraum zwischen dem Kolben und der vorderen Zylinderstirnwand einströmt und den Kolben von einer Normalposition in eine Straffhalteposition verschiebt, und einer Rücklaufsperre welche den Kolben in der Straffhalteposition hält.

Ein derartiger Gurtstraffer ist aus der G 85 02 536.4 bekannt, bei dem das Zugseil durch eine zentrale Bohrung des Kolbens hindurchgeführt ist und auf der dem Druckraum abgewandten Seite des Kolbens mittels einer Seilklemme gehalten ist. Die Rücklaufsperre dieses bekannten Gurtstraffers besteht aus einer am Außenumfang des Kolbens vorgesehenen ringförmigen Ausnehmung, die sich in Richtung auf das hintere Ende des Zylinders konisch verjüngt, sowie einem in dieser Ausnehmung verschiebbaren Sperring mit einem keilförmigen Querschnitt, der sich in der Straffhaltepostion des Kolbens in der Ausnehmung verkeilt. Am Außenumfang des Kolbens ist eine Ringnut vorgesehen, die zwischen der Ausnehmung für den Sperring und der Seilklemme angeordnet ist und in welcher ein Dichtring zur Abdichtung des Druckraums eingesetzt ist. Nachteilig bei diesem bekannten Gurtstraffer ist die aufwendige Konstruktion der Rücklaufsperre, die ein Rastprofil auf dem Innenumfang des Zylinders erforderlich macht.

Aufgabe der Erfindung ist es, einen Gurtstraffer der eingangs genannten Art derart weiterzubilden, daß die Rücklaufsperre sowie das/die Zugseile auf einfache Weise sicher und raumsparend am Kolben angeordnet werden können.

Diese Aufgabe wird bei dem Gurtstraffer der eingangs genannten Art dadurch gelöst, daß die Rücklaufsperre einen Konusabschnitt mit zum hinteren Ende des Zylinders zunehmendem Durchmesser und auf dem Konusabschnitt einen in Zylinderrichtung verschiebbaren Sperrkörper enthält.

Die Vorteile der Erfindung bestehen insbesondere darin, daß die Rücklaufsperre einen einfachen Aufbau aufweist und durch einen zum hinteren Ende des Zylinders zunehmenden Konus, auf dem sich ein verschiebbarer Sperrkörper befindet, eine sichere Verklemmung von Zylinder, Sperrkörper und Konus erreicht wird, wenn - nach dem Zurücktreiben des Kolbens - der Kolben mitsamt dem Konus mit nach vorn gerichteten Zugkräften der Zugseile beaufschlagt wird. Die Verklemmung von Zylinder, Sperrkörper und Konusabschnitt wirkt zuverlässig, ohne daß es einer inneren Rastprofilierung an der Innenwandung des Zylinders bedarf.

Vorteilhafterweise ist ein Befestigungselement zum Befestigen des bzw. der Zugseile druckraumseitig am Kolben angeordnet, so daß die Zugseile nicht mehr notwendigerweise durch den Kolben hindurchgeführt werden müssen und hinter dem Kolben an der Kolbeneinheit befestigt sind. Bei dieser Ausführungsform der Erfindung besitzt der Kolben vorteilhafterweise einen Zapfen, der in Richtung auf das hintere Ende des Zylinders gerichtet ist und die Rücklaufsperre trägt, die beispielsweise mittels einer Schraubverbindung an dem Zapfen befestigt werden kann.

Gemäß einer bevorzugten Ausführungsform der Erfindung ist die Rücklaufsperre verschiebbar an dem oder den Zugseilen angeordnet und lagert verschieblich vor dem Befestigungselement, an dem die Zugseile befestigt werden. Bei dieser Ausführungsform der Erfindung befindet sich also die aus Konusabschnitt, Sperrkörper und Kolben gebildete Kolbeneinheit vor dem Befestigungselement, die Zugseile werden am hinteren Ende der Kolbeneinheit befestigt.

Wird der Kolben bei Zündung des Gasgenerators von der Normal- in die Straffhalteposition verschoben, wird der Sperrkörper von einem entsprechend ausgebildeten Kolbenabschnitt mitgenommen. Ist der Kolben in der Straffhalteposition angelangt und greift dann eine Zugkraft in Richtung des Gurtanlenkgliedes an, verkeilt sich der Sperrkörper zwischen dem Konusabschnitt und der Zylinderinnenwand, wodurch ein weiteres Rücklaufen des Kolbens verhindert wird.

Der Sperrkörper ist bevorzugt als geschlitzter Ring ausgebildet, der gegen die Innenwand des Zylinders gerichtete Rastansätze trägt. Die geschlitzte Ausführung ist notwendig, um ein Gleiten des Ringes in Richtung auf die hintere Zylinderstirnwand entlang dem sich verbreiternden Konusabschnitt zu ermöglichen, wenn in der Straffhalteposition eine Zugkraft auf den Kolben wirkt. Die Rastansätze ihrerseits tragen in diesem Fall zu einer effizienteren Verkeilung des Ringes zwischen dem Konusabschnitt und der Zylinderinnenwand bei. Alternativ kann der Sperrkörper auch aus mehreren zusammenhängenden Segmenten gebildet sein.

Damit das Treibmittel aus dem Druckraum nicht am Kolben vorbei entweichen kann und somit zu einer Minderung der auf den Kolben wirkenden Schubkraft führt, ist umfangseitig am Konusabschnitt eine ringförmige Dichtung vorgesehen, die gegen die Innenwand des Zylinders anliegt. Vorteilhafterweise ist diese Dichtung hinter der konischen Verbreiterung des Konusabschnitts vorgesehen. In diesem Fall sind die Rücklaufsperre sowie das Befestigungselement für das/die Zugsseile im Druckraum angeordnet. Besonders bevorzugt ist zwischen dem Konusabschnitt und der ringförmigen Dichtung ein radial auswärts gerichteter Fangansatz an der Kolbeneinheit angeformt, der den Sperrkörper auch dann noch sicher mit nach vorn gerichteten Sperrkräften beaufschlagt und die Verklemmung herbeiführt, wenn unter der Zündung des Gasgenerators eine stärkere Verformung des Konusabschnitts oder des Sperrkörpers eintritt. Der Fangansatz verhindert, daß der Sperrkörper unter der Treibgaswirkung nach hinten von dem Konusabschnitt abrutscht.

Vorteilhafterweise ist der Konusabschnitt als separate Konushülse mit einer zentralen Bohrung ausgebildet, welche über den erfindungsgemäßen Zapfen geschoben und auf diesem befestigt ist. Beispielsweise ist das freie Ende des Zapfens mit einem Außengewinde versehen, auf dem eine Mutter zur Sicherung der Konushülse aufgeschraubt ist. In dieser Ausführungsform ist die Konushülse zwischen dem Befestigungselement und der Mutter kraftschlüssig gehalten.

Bei einer zweckmäßigen Weiterbildung der Erfindung ist das Befestigungselement zum Befestigen des/der Zugseile als Seilklemme ausgebildet. Stellt das Befestigungselement beispielsweise einen Kolbenabschnitt mit einer axialen Bohrung dar, in welche das Zugseilende eingeführt ist, wird das Zugseil durch umfangseitige Pressung dieses Kolbenabschnitts kraftschlüssig in der Bohrung gehalten. Die Zugseillänge läßt sich vorteilhafterweise reduzieren, wenn das Befestigungselement ein zum Druckraum offenes Sackloch im Kolben enthält, in welchem das Zugseil eingeklemmt ist. Gleichfalls ist mittels einer solchen Konstruktion ausgeschlossen, daß in einer Aulösesituation Treibmittel am Zugseil vorbei in den Raum hinter den Kolben gelangen kann.

Bei einer bevorzugten Ausführungsform ist ein Gasgenerator-Gehäuse in dem Druckraum zwischen dem Kolben und der vorderen Zylinderstirnwand vorgesehen, welches zur Aufnahme des Gasgenerators dient. Auf diese Weise läßt sich ein kompakter Aufbau des Gurtstraffers realisieren, da kein zusätzlicher Raum neben dem Zylinder für den Gasgenerator in Anspruch genommen wird.

Vorzugsweise weist das Gasgenerator-Gehäuse einen Hohlraum zur Aufnahme des Gasgenerators auf, welcher über einen Treibmittelkanal mit dem Druckraum verbunden ist. Ebenso sind eine oder zwei Durchgangsbohrungen zum Durchführen des/der Zugseile vorhanden, welche auf diese Weise definiert an dem Gasgenerator vorbeigeführt werden.

Die vordere Zylinderstirnwand ist vorzugsweise entweder von dem Gasgenerator-Gehäuse - und hierbei bevorzugt von dessen vorderer Stirnwand - oder einer separaten Trennwand gebildet.

Um von außen ein Zündkabel zum Gasgenerator zu führen, weist die vordere Zylinderstirnwand bevorzugt mindestens eine Bohrung auf, deren Durchmesser annähernd dem Durchmesser des Zündkabels entspricht, um ein Entweichen des Treibmittels durch diese Bohrung weitgehend zu verhindern.

Einer raumeffizienten Anbringung des Gurtstraffers, beispielsweise in der Nähe eines Fahrzeugsitzes, kommt es zugute, wenn eine Seilumlenkung zwischen der vorderen Zylinderstirnwand und dem Gurtanlenkglied vorgesehen ist. Hierdurch kann der Zylinder z.B. parallel zum Fahrzeugboden neben dem Fahrzeugsitz angeordnet werden, während sich das Gurtanlenkglied - beispielsweise ein Gurtschloß - aufwärts ragend und leicht zugänglich in Hüfthöhe des Fahrzeuginsassen befindet.

Vorteilhafterweise ist die Seilumlenkung an einem Teil des Fahrzeugs, beispielsweise am Fahrzeugsitz, befestigbar. Ein einfacher Aufbau des Gurtstraffers ergibt sich weiterhin dadurch, wenn bei dieser Ausführungsform der Zylinder an der Seilumlenkung befestigt ist.

Vorteilhafte Weiterbildungen der Erfindung sind durch die Merkmale der Unteransprüche gekennzeichnet.

Im folgenden werden zwei Ausführungsbeispiele der Erfindung anhand der Zeichnungen näher erläutert. Es zeigen:
- Fig. 1: eine Seitenansicht eines Gurtstraffers, teilweise im Schnitt;
- Fig. 2: eine vergrößerte Seitenansicht des Kolbens und des Zugseils des Gurtstraffers gemäß der Fig. 1;
- Fig. 3: einen Querschnitt durch den Konusabschnitt des Gurtstraffers gemäß der Fig. 1;
- Fig. 4: den Sperrkörper des Gurtstraffers gemäß der Fig. 1; und
- Fig. 5: die Kolbeneinheit einer zweiten Ausführungsform der Erfindung.

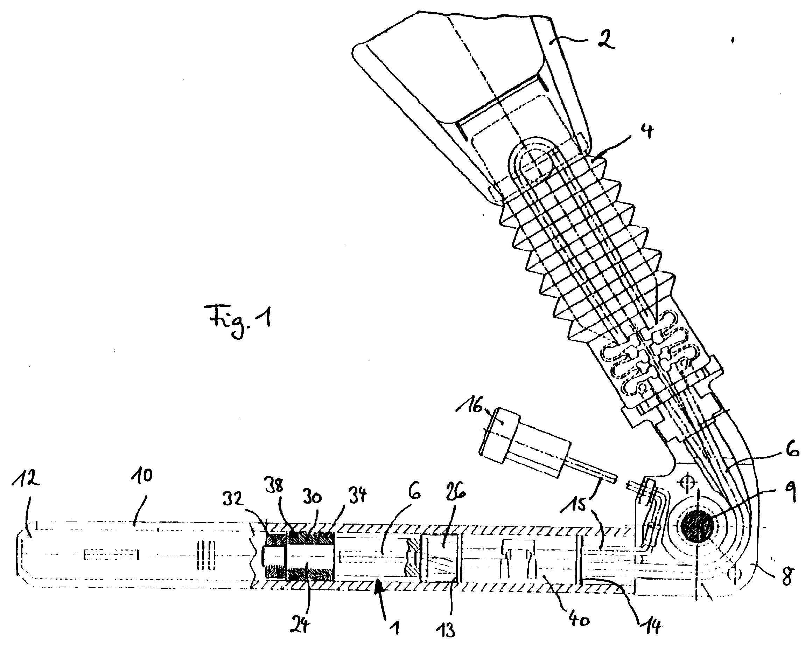

In Fig. 1 ist ein Gurtstraffer mit einem als Gurtschloß ausgebildeten Gurtanlenkglied 2 und einem linearen Zylinder 10 sowie einem in dem Zylinder 10 verschiebbar angeordneten Kolben 1 dargestellt. Der Kolben 1 ist mit dem Gurtanlenkglied 2 über ein dehnfestes Zugseil 6 verbunden, dessen eines Ende hierzu schlaufenförmig an dem Gurtanlenkglied 2 befestigt ist. Im weiteren Verlauf ist das Zugseil 6 durch eine Durchgangsöffnung einer Seilumlenkung 8 und anschließend durch die vordere Zylinderstirnwand 14 des Zylinders 10, welcher an der Seilumlenkung 8 befestigt ist, zum Kolben 1 geführt. Auf der Strecke zwischen dem Gurtanlenkglied 2 und der Seilumlenkung 8 ist das Zugseil 6 von einem Faltenbalg 4 ummantelt.

Zwischen der vorderen Zylinderstirnwand 14 und dem Kolben 1 ist ein Druckraum 26 vorgesehen, in welchem ein zylinderförmiges Gasgenerator-Gehäuse 40 zur Aufnahme eines Gasgenerators (nicht dargestellt) angeordnet ist. In dem gezeigten Ausführungsbeispiel bildet die der Seilumlenkung 8 zugewandte Stirnseite des Gasgenerator-Gehäuses 40 die vordere Zylinderstirnwand 14, durch welche das Zugseil 6 hindurchgeführt ist. Auf der dem Kolben 1 zugewandten Stirnseite 13 des Gasgenerator-Gehäuses 40 ist ebenfalls eine Bohrung vorgesehen, um das Zugseil 6 zum Kolben 1 zu führen.

Weiterhin weist das Gasgenerator-Gehäuse 40 einen Hohlraum zur Aufnahme des Gasgenerators auf, welcher über einen Treibmittelkanal (nicht dargestellt) mit dem Druckraum 26 vor dem Kolben 1 verbunden ist. Der Treibmittelkanal verläuft hierbei durch die hintere Stirnwand 1 3 des Gasgenerator-Gehäuses 40. Der Gasgenerator seinerseits ist weiterhin über ein Zündkabel 15, welches durch die vordere Zylinderstirnwand 14 und anschließend durch eine Durchgangsöffnung in der Seilumlenkung 8 zu einem außen liegenden Stecker 16 geführt ist, mit einem Sensor (nicht dargestellt) verbunden. Wenn der Sensor auf einen Aufprall des Fahrzeugs anspricht, wird der Zünder des Gasgenerators gezündet und der Gasgenerator gibt dann sein Treibmittel explosionsartig über den Treibmittelkanal in den Druckraum 26 ab und der Kolben 1 wird ruckartig zum hinteren Ende 12 des Zylinders 10 verschoben.

In einer alternativen, nicht dargestellten Ausführungsform der Erfindung ist eine separate Trennwand zwischen dem Gasgenerator-Gehäuse 40 und der Seilumlenkung 8 vorgesehen, welche die vordere Zylinderstirnwand 14 bildet.

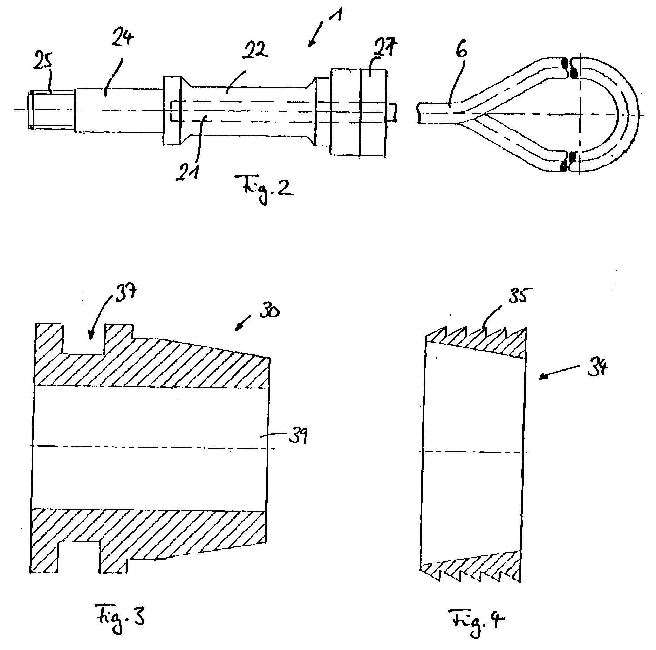

In Fig. 2 ist der Kolben 1 und das Zugseil 6 in Vergrößerung dargestellt. Der einstückig ausgebildete Kolben 1 weist in Längsrichtung im wesentlichen drei aneinander anschließendene Abschnitte auf. Auf seiner der vorderen Zylinderstirnwand 14 zugewandten Seite (bezogen auf Fig. 2 rechts) enthält der Kolben 1 einen becherförmigen, zur vorderen Zylinderstirnseite 14 offenen Vorderabschnitt 27, dessen Außendurchmesser geringfügig kleiner ist als der Innendurchmesser des Zylinders 10. Durch den Hohlraum des Vorderabschnitts 27, der einen Großteil des Druckraums 26 bildet, ist das kolbenseitige Ende des Zugseils 6 zu einem Sackloch 21 geführt, welches in einem mittleren Abschnitt des Kolbens 1 endet. Dieser mittlere Kolbenabschnitt stellt ein im wesentlichen zylinderförmiges Befestigungselement 22 für das Zugseil 6 dar. Hierzu wird das Zugseil 6 in das Sackloch 21 eingeführt und der Kolben 1 im Bereich des Befestigungselementes 22 umfangseitig zusammengepreßt, um das Zugseil 6 in dem Sackloch 21 kraftschlüssig zu halten. Das Befestigungselement 22 wirkt demnach als Seilklemme für das Zugseil 6. Das Material des Kolbens 1 - beispielsweise ein hartes, aber dennoch plastisch verformbares Metall - ist entsprechend gewählt.

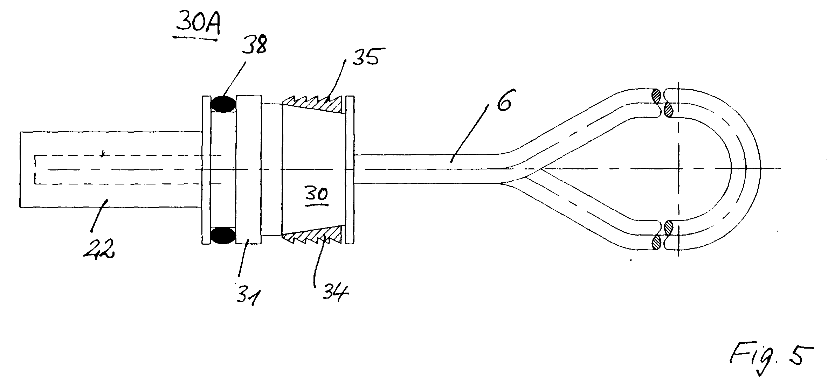

An das Befestigungselement 22 ist in Längsrichtung des Zylinders 10 zentrisch ein zylindrischer Zapfen 24 einstückig angeformt. Ein als Konushülse ausgebildeter Konusabschnitt 30 (Fig. 3) mit einer zentralen Bohrung 39, deren Durchmesser geringfügig größer ist als der Durchmesser des Zapfens 24, ist auf den Zapfen 24 derart aufgeschoben, daß der Durchmesser des Konusabschnitts 30 zum freien Ende des Zapfens 24 zunimmt (Fig. 1). Auf seiner der vorderen Zylinderstirnwand 14 abgewandten Seite weist der Konusabschnitt 30 eine Ringnut 37 zur Aufnahme einer ringförmigen Dichtung 38 auf, welche bei zusammengesetzter Kolben-/Zylinder-Einheit an der Innenwand des Zylinders 10 anliegt (Fig. 1). Der Druckraum 26 erstreckt sich demnach von der vorderen Zylinderstirnwand 14 bis zu dieser Dichtung 38. Dadurch liegt sowohl das Befestigungselement 22 als auch der sich konisch verbreiternde Teil des Konusabschnitts 30 im Druckraum 26.

Der Konusabschnitt 30 ist im montierten Zustand kraftschlüssig mit einer Mutter 32 gegen das Befestigungselement 22 gespannt, welche auf ein Außengewinde 25 des Zapfens 24 aufgeschraubt ist (Fig. 1).

Zwischen dem Konusabschnitt 30 und der Innenwand des Zylinders 10 ist ein als geschlitzter Ring ausgebildeter Sperrkörper 34 (Fig. 4) angeordnet, dessen Innendurchmesser sich zum hinteren Ende 12 des Zylinders 10 entsprechend dem konischen Verlauf des Konusabschnitts 30 vergrößert (Fig. 1). Hierbei liegt die Innenfläche des Sperrkörpers 34 vorteilhafterweise möglichst großflächig und über den gesamten Umfang an der konischen Außenfläche des Konusabschnitts 30 an. Der 34 Sperrkörper weist weiterhin an seinem Außenumfang in Axialrichtung beabstandete, umlaufende Rastansätze 35 auf, welche gegen die Innenwand des Zylinders 10 gerichtet sind (Fig. 4). Der Konusabschnitt 30 und der Sperrkörper 34 bilden zusammen die Rücklaufsperre.

Bei Druckbeaufschlagung des Kolbens 1 durch das Treibmittel des gezündeten Gasgenerators nimmt das dem hinteren Zylinderende zugewandte Ende des Befestigungselements 22 den auf dem Konusabschnitt 30 verschiebbaren Sperrkörper 34 mit. Hat der Kolben 1 das hintere Ende 12 des Zylinders 10 erreicht und wirkt nun eine Zugkraft auf das Zugseil 6, verkeilt sich der Sperrkörper 34 zwischen dem Konusabschnitt 30 und der Zylinderinnenwand und verhindert ein Zurücklaufen des Kolbens 1. Hierbei verzahnen sich die Rastansätze 35 mit der Zylinderinnenwand unter Aufspreizung des Sperrkörpers 34.

Zur Befestigung des Gurtstraffers an einem Fahrzeugaufbau oder einem Fahrzeugsitz weist die Seilumlenkung 8 eine quer zum Zylinder 10 verlaufende Bohrung 9 auf, durch welche eine Schraube hindurchführbar und mit einem Fahrzeugteil verschraubbar ist.

Fig. 5 zeigt die Kolbeneinheit 30A zusammen mit einem Zugseil, welches an seinem vorderen Ende eine Schlaufe aufweist, an welcher beispielsweise ein Gurtschloß befestigt ist. Die Kolbeneinheit 30A weist zur Seite des Zugseils 6 hin einen Konusabschnitt 30 auf, der an seinem vergrößerten hinteren Ende in einen radial nach auswärts gerichteten Fangansatz 31 übergeht. An den Fangansatz schließt sich nach hinten eine Ringnut an, welche eine Ringdichtung 38 aufnimmt. Hinter der Ringnut mit Dichtung 38 befindet sich das Befestigungselement 22, mit dem das Zugseil 6 an der Kolbeneinheit 30A befestigt ist.

## Patentansprüche

1. Gurtstraffer für ein Fahrzeuginsassen-Rückhaltesystem, mit einem Zylinder (10),
einem in dem Zylinder (10) verschiebbaren Kolben (1),
mindestens einem Zugseil (6), welches von dem Kolben (1) mit geringem Spiel durch eine vordere Zylinderstirnwand (14) zu einem Gurtanlenkglied (2) verläuft, einem Gasgenerator, bei dessen Zündung ein Treibmittel in einen Druckraum (26) zwischen dem Kolben (1) und der vorderen Zylinderstirnwand (14) einströmt und den Kolben (1) von einer vorderen Normalposition in eine hintere Straffhalteposition verschiebt, und
einer Rücklaufsperre (30, 34), welche den Kolben (1) in der Straffhalteposition hält dadurch gekennzeichnet, daß die Rücklaufsperre (30, 34) einen Konusabschnitt (30) mitzum hinteren Ende (12) des Zylinders (10) zunehmendem Durchmesser und auf dem Konusabschnitt (30) einen in Zylinderrichtung verschiebbaren Sperrkörper (34) enthält.

2. Gurtstraffer nach Anspruch 1,
dadurch gekennzeichnet, daß ein Befestigungselement (22) für das/die Zugseile (6) druckraumseitig am Kolben (1) angeordnet ist oder einen druckraumseitigen Kolbenabschnitt bildet und daß sich die Rücklaufsperre (30, 34) an das Befestigungselement (22) in Richtung auf das hintere Ende (12) des Zylinders (10) anschließt.

3. Gurtstraffer nach Anspruch 1 oder 2,
dadurch gekennzeichnet, daß der Kolben (1) einen Zapfen (24) enthält, der in Richtung auf das hintere Ende des Zylinders (10) absteht und an welchem die Rücklaufsperre (30, 34) angeordnet ist.

4. Gurtstraffer nach Anspruch 2,
dadurch gekennzeichnet, daß der Zapfen (24) einstückig und zentrisch an einem Befestigungselement (22) gemäß Anspruch 1 angeformt ist.

5. Gurtstraffer nach Anspruch 1 oder 2,
dadurch gekennzeichnet, daß die Rücklaufsperre (30, 34) mittels einer Schraubverbindung an dem Befestigungselement (22) befestigt ist.

6. Gurtstraffer nach Anspruch 1,
dadurch gekennzeichnet, daß die Rücklaufsperre (30, 34) verschiebbar an dem/den Zugseilen (6) angeordnet ist und beweglich vor dem Befestigungselement (22) lagert, an dem das/die Zugseile (6) befestigt sind.

7. Gurtstraffer nach Anspruch 6,
dadurch gekennzeichnet, daß die Rücklaufsperre (30, 34) eine Durchgangsbohrung aufweist, durch die das/die Zugseile hindurchgeführt sind.

8. Gurtstraffer nach einem der vorstehenden Ansprüche,
dadurch gekennzeichnet, daß der Sperrkörper (34) als geschlitzter Ring ausgebildet ist, der gegen die Innenwand des Zylinders (10) gerichtete Rastansätze (35) trägt.

9. Gurtstraffer nach einem der vorstehenden Ansprüche,
dadurch gekennzeichnet, daß der Sperrkörper (34) aus mindestens zwei Segmenten zusammengesetzt ist.

10. Gurtstraffer nach einem der vorstehenden Ansprüche,
dadurch gekennzeichnet, daß der Konusabschnitt (30) hinter seinem hinteren Ende eine ringförmige Dichtung (38) trägt, die gegen die Innenwand des Zylinders (10) anliegt.

11. Gurtstraffer nach einem der vorstehenden Ansprüche,
dadurch gekennzeichnet, daß zwischen dem Konusabschnitt (30) und der ringförmigen Dichtung (38) ein radial auswärts gerichteter Fangansatz (31) angeordnet ist.

12. Gurtstraffer nach Anspruch 9,
dadurch gekennzeichnet, daß der Fangansatz (31) als Ringwulst ausgebildet ist.

13. Gurtstraffer nach einem der Ansprüche 2 bis 4,
dadurch gekennzeichnet, daß der Konusabschnitt (30) als separate Konushülse mit einer zentralen Bohrung ausgebildet ist und auf dem Zapfen (24) befestigt ist.

14. Gurtstraffer nach einem der vorhergehenden Ansprüche,
dadurch gekennzeichnet, daß das Befestigungselement (22) zum Befestigen des/der der Zugseile (6) als Seilklemme ausgebildet ist.

15. Gurtstraffer nach Anspruch 14,
dadurch gekennzeichnet, daß das Befestigungselement (22) ein zum Druckraum (26) offenes Sackloch (21) umfaßt, in welchem das kolbenseitige freie Ende des/der Zugseile (6) eingeklemmt ist.

16. Gurtstraffer nach einem der vorstehenden Ansprüche,
gekennzeichnet durch ein Gasgenerator-Gehäuse (40) in dem Druckraum (26) zur Aufnahme des Gasgenerators.

17. Gurtstraffer nach Anspruch 16,
dadurch gekennzeichnet, daß das Gasgenerator-Gehäuse (40) einen Hohlraum zur Aufnahme des Gasgenerators, einen Treibmittelkanal von dem Hohlraum zu dem Druckraum (26) sowie eine oder zwei Durchgangsbohrungen zum Durchführen des/der Zugseile (6) aufweist.

18. Gurtstraffer nach einem der vorstehenden Ansprüche,
dadurch gekennzeichnet, daß das Gasgenerator-Gehäuse (40) oder eine separate Trennwand die vordere Zylinderstirnwand (14) bildet.

19. Gurtstraffer nach einem der vorhergehenden Ansprüche,
dadurch gekennzeichnet, daß die vordere Zylinderstirnwand (14) Bohrungen zum Hindurchführen eines Zündkabels (15) zu dem Gasgenerator aufweist.

20. Gurtstraffer nach einem der vorstehenden Ansprüche,
gekennzeichnet durch eine Seilumlenkung (8) zwischen der vorderen Zylinderstirnwand (14) und dem Gurtanlenkglied (2).

21. Gurtstraffer nach Anspruch 20,
dadurch gekennzeichnet, daß der Zylinder (10) an der Seilumlenkung (8), und die Seilumlenkung (8) an einem Teil eines Fahrzeuges befestigbar ist.
